Europäisches Patentamt

(19) European Patent Office

Office européen des brevets

(11) Publication number : **0 426 428 B1**

(12) **EUROPEAN PATENT SPECIFICATION**

(45) Date of publication of patent specification :
11.08.93 Bulletin 93/32

(51) Int. Cl.⁵ : **A23G 3/30, A23L 1/22**

(21) Application number : **90311869.3**

(22) Date of filing : **30.10.90**

(54) Encapsulated sweetener-flavour delivery system, and its production.

(30) Priority : **31.10.89 US 429576**

(43) Date of publication of application :
**08.05.91 Bulletin 91/19**

(45) Publication of the grant of the patent :
**11.08.93 Bulletin 93/32**

(84) Designated Contracting States :
**BE CH DE DK ES FR GB GR IT LI NL SE**

(56) References cited :
**EP-A- 0 202 819**
**EP-A- 0 314 626**
**US-A- 3 949 096**
**US-A- 4 276 312**
**US-A- 4 386 106**

(73) Proprietor : **WARNER-LAMBERT COMPANY
201 Tabor Road
Morris Plains New Jersey 07950 (US)**

(72) Inventor : **Cherukuri, Subraman Rao
10 Jean Drive
Towaco, New Jersey 07082 (US)**
Inventor : **Chau, Tommy Limkwong
3 Dartmouth Avenue 3A
Bridgewater, NJ 08807 (US)**
Inventor : **Raman, Krishna P.
5 Marre Drive
Randolph, New Jersey 07869 (US)**
Inventor : **Orama, Angel Manual
19 Elizabeth Avenue
Stanhope, New Jersey 07874 (US)**

(74) Representative : **Jones, Michael Raymond et al
HASELTINE LAKE & CO. Hazlitt House 28
Southampton Buildings Chancery Lane
London WC2A 1AT (GB)**

## Description

This invention relates to a new delivery system for flavors and sweeteners and to the process for its preparation, which has use in a variety of products including comestibles such as chewing gum compositions, confections, pharmaceuticals, food products such as beverages and some baked goods, dentifrice compositions and denture adhesives and in packaging applications. More particularly, this invention relates to a process for preparing a flavor delivery system which facilitates the delivery of higher levels and intensity of flavor without the harshness or off notes that is experienced at higher flavor concentrations.

Flavor delivery systems are well known in the art which may be divided into various classes based upon their physical states, namely, liquids, emulsions, pastes or solids. Not only are these states different but the potential uses for each state also differ as do their method of manufacture.

Over the years considerable effort has been directed toward the preparation of flavoring materials. Specifically, flavor materials have been sought that provide greater flavor intensity coupled with sustained flavor release for long periods of time.

An outgrowth of this activity has been the observation that when free flavor oil is added to gum base, only about 5% to 40% of the initial flavor oil is released from the gum upon chewing. It appears that as much as 80% of the remaining flavor oil becomes irreversibly bound to the gum base and cannot be chewed out.

To overcome this difficulty with flavor oils in particular, various attempts have been made to encapsulate the flavor oils or use dried ingredients to inhibit the gum base binding action. In addition, considerable effort has been directed to the development of delayed release flavoring agents that will delay release of the flavoring agent while permitting uniform release of the flavor over an extended period of time. The obvious benefit of immediate/delayed release is the ability to provide uniform flavor sensation during the entire consumption period which has not been previously attainable by the direct incorporation of conventional seasonings and flavor oils into chewing gum formulations.

Spray drying is one of the most widely used techniques for encapsulating or fixing a flavor. In this procedure a flavor oil is usually blended with a film forming agent dispersed in water and then emulsified to form a stable emulsion. Emulsification is necessary because flavor oils are insoluble in the water needed to dissolve the film forming agent. Obtaining an emulsion of low viscosity, at high solids content, is critical to producing an acceptable product. Stability at higher temperatures is also critical to avoid volatilization of the flavor oil. Maintaining low inlet temperatures (i.e. around is 155°C) as well as minimizing the residence time in the dryer are beneficial if the flavor is chemically unstable. The air drying conditions depend on the emulsion and product characteristics such as particle size of the product required. Modifications to the use of heat to remove the water from the emulsion have also been attempted. Some of these include the use of a dehydrating solvent as the drying medium rather than hot air. Freeze drying has also been contemplated.

Flavor fixation has also been obtained by the extrusion method wherein the flavor oil is coextruded with a water soluble sugar or sugar mixture, dried and ground for use. These products find application in dry mixes for instant release of the flavor on contact with water. Such products generally contain 10 to 15% by weight of flavor oil.

An extensive discussion of the prior art with respect to the extension of flavor is found in U.S. Patent No. 4,590,075 to Wei et al. The patentees discuss the preparation of encapsulated flavors which are added together with a quantity of a non-confined hydrophobic flavor oil to a suspension agent before formulation in a chewing gum (U.S. Patent No. 3,920,849 to Marmo et al.); the encapsulation of flavor in high molecular weight material such as polyvinyl acetate (U.S. Patent No. 3,826,847 to Ogawa et al.); the preparation of a flavor composite by crosslinking the flavor with a water-insoluble hydrophilic polymer such as hydroxyethyl acrylate (U.S. Patent No. 3,761,286); and the preparation of microencapsulated flavor particles and their dispersion in a slurry on the surface of a chewing gum (U.S. Patent No. 3,962,463). Further, U.S. Patent No. 4,695,463 to Yang et al. is noted and discloses a flavor delivery system that relies on the immobilization of the flavor within a crosslinked hydrocolloid multivalent alginate or carageenate matrix.

Further, U.S. Patent No. 4,597,970 to Sharma et al. prepares a delivery system for actives such as sweeteners and including flavors which utilizes a hydrophobic matrix comprising edible fatty acids or waxes, lecithin and a glyceride component. This system is urged to provide a protective barrier and controlled release characteristics to the active so contained. The combination of materials in the encapsulating matrix provides wetting capabilities with respect to non-uniform core materials such as aspartame, while providing improved heat stability and thereby, extended high temperature processing capability. These attributes were frequently achieved at a cost of delay in release of the active.

U.S. Patent No. 3,867,556 to Darragh et al. also encapsulated volatile flavors in a fat or wax material. The patentees had found that the initial or base encapsulation displayed excessive instability to heat, and as their product was intended primarily for incorporation into baked goods, they applied a second coating of a water-

EP 0 426 428 B1

soluble material such as gum arabic, which would provide high temperature stability while conferring rapid disintegration on contact with moisture. The Darragh et al. product likewise exhibited delayed flavor release.

Further, U.S. Patent Nos. 4,515,769 and 4,386,106 both to Merritt et al. disclose the encapsulation of flavor material in a partially hydrophilic matrix comprising gelatin, a natural gum (or albumin as disclosed in the '769 Patent) or a plasticizer. This combined encapsulant was placed in an emulsion with the flavoring agent and thereafter dried to a solid matrix which was then ground to a base powder. The base powder was then coated with a water-insoluble material which purported to prevent flavor loss and delay flavor release in contact with moisture. Merritt et al. sought only to achieve a burst of flavor when the physical mastication of their flavor composite ruptured the outer encapsulating material. Merritt et al. may also be consulted in cumulative fashion for their review of the literature relevant to their invention.

U.S. Patent No. 4,087,557 to Bakal et al. relates to the incorporation of an artificial sweetener directly into the ester gum component of a chewing gum base, to achieve a delay and corresponding extension in sweetener release (column 2, lines 31-42). The patent contemplates the incorporation of certain flavors, specifically, food acids such as tartaric acid, succinic acid, etc. directly into the ester gum component, however, indicates that conventional flavors such as flavor oils are added separately after the gum base constituents including the artificial sweetener containing-ester gum have been mixed with each other and cooled. The flavor component is incorporated into chewing gums prepared in accordance with the patent in the conventional fashion, i.e., by direct incorporation of artificial flavor and/or by the incorporation of flavor coated with a hydrophilic material such as gum arabic (see Bakal et al., Example 6). Bakal et al. accordingly offers no solutions to the problems of flavor delivery and extension of concern to the art.

Other approaches to the preparation of flavor composites, particularly with flavor oils, are noted. Thus, U.S. Patent No. 3,041,180 to Swisher discloses a process for extruding a flavor oil with glycerine and corn syrup solids to form an encapsulated extruded flavor oil. The solid was dried and yielded a particulate solid. U.S. Patent No. 4,610,890 to Miller et al. discloses another process for preparing an extruded flavor oil with sugar, a starch hydrolysate and an emulsifier.

U.S. Patent Nos. 4,448,789 and 4,569,852 to Yang discloses a novel flavoring agent -- hydrophilic polymer -- by blending the flavor with the polymer and blending while heating to prepare a homogenous product. Once coupled and ground, the product can be used as a flavoring for chewing gum and confectionery products.

U.S. Patent No. 4,271,202 to Giel relates to a spray-drying process for forming solid flavoring material capable of including high percentages of flavoring oil per total particulate unit of weight. Because of the high oil content possible, such spray-dried products found wide use in a number of beverages and other foods. However, it was also found that spray-dried flavors prepared by this and similar known methods typically exhibit a relatively limited shelf life. In addition, the high temperatures necessarily involved during spray-drying processes have been found to impair the flavor and aroma of various heat-sensitive oil flavors, such as those in citrus fruit. Furthermore, solids formed by spray-drying commonly exhibit hygroscopic characteristics making them difficult to handle and store.

In addition to these techniques, U.S. Patent No. 4,452,821 to Gergely is directed to a confectionery product, especially a chewing gum, that purports to offer prolonged, extended delivery of flavoring aroma and/or active pharmaceutical ingredient. This is accomplished by providing the flavoring, aroma or active pharmaceutical ingredient in a solid solution or mixture within a wax containing functional groups, said wax forming a homogeneous mixture of solid solution. The wax does not contain any functional groups and is substantially immiscible with the flavoring, aroma or active pharmaceutical ingredient.

US-A-4 276 312 discloses a method of encapsulation used in the fields of food, confection, chewing gums, toiletries cosmetics etc.

The approaches to flavor modification discussed above all fall short of providing a flavor delivery system which achieves the advantages of flavor intensity and fullness inherent in flavor oils in combination with improved release and extension characteristics. In most instances, where a modified flavor of this type is incorporated into a chewing gum composition, the gum base and, in particular, the elastomer component sequesters the flavor and thereby prevents its release during the chew. Moreover, the plasticizers and softeners conventionally employed in gum formulations tend to increase moisture pickup and corresponding flavor migration and loss, so that the flavor that might be available for release on chewing is further diminished in content and resulting extent of release and sensation.

It can accordingly be seen from the foregoing discussion that a broad variety of techniques, including the formation of spray-dried particles from the combination of flavor oils with hydrophilic film forming materials, have been tried, but have resulted in products of limited acceptability. If high levels of flavour oil are incorporated, the resulting particles yield an excessively harsh and bitter taste sensation, and off notes are experienced. Conversely, the reduction of the flavour intensity to avoid such bitterness, reduces the concentration of flavour in the particles so that an undesirably large quantity of particles must be added to a particular product to provide the desired flavour sensation. Finally, regardless of which of these approaches is followed, the longevity of the flavour sensation is undesirably limited. Accordingly, a need exists for the development of a flavour delivery system which improves flavour intensity, presentation, longevity and release in combination with greater stability and protection of the active agent.

According to one aspect of the present invention, there is provided a process for producing a flavour delivery system offering improved uniformity of flavour release, temperature stability, and taste and aroma masking, comprising a spray-dried emulsion of:

(a) a flavour oil component in an amount of from 1% to 40% by weight of the final delivery system;

(b) a sweetener in an amount of from 0.5% to 30% by weight of the final delivery system; and

(c) a film-forming polymer coating component in an amount from 30% to 80% by weight of the final delivery system:

wherein the flavour delivery system is produced by:-

(a) preparing an aqueous solution of the film-forming polymer coating material;

(b) adding the sweetener to the film-forming polymer coating solution of step (a) to form a first aqueous solution mixture;

(c) then combining the flavour component with the first aqueous solution mixture of step (b) to form a second aqueous solution mixture;

(d) forming an emulsion from the second aqueous solution mixture; and

(e) forming particles from the emulsion by spray drying, in which particles the flavour is dispersed as discrete droplets each surrounded by a matrix comprising the sweetener and the coating.

The flavour component is a flavour oil and is preferably present in an amount by weight of the final delivery system of from 10% to 20%. Preferably the sweetener is present in an amount from 4% to 20% by weight of the final delivery system. Preferably the film-forming polymer coating component is present in n an amount of from 50% to 75% by weight of the final delivery system.

The film-forming polymer coating material may comprise a hydrocolloid. Preferably, the hydrocolloid should be capable of emulsifying oil in an oil-in-water system. The hydrocolloid may be generally selected from gums, pectins, alginates, mucilages, and mixtures thereof.

The present invention contemplates that in the instance where the film-forming polymer coating is prepared from a film former that lacks the ability to form an oil-in-water emulsion, an emulsifier may be included. The emulsifier may be present in an amount ranging up to 10% by weight of the final delivery system. Suitable emulsifiers may include mono-, di and triglyceride esters of fatty acids, polysorbate, sodium lauryl sulphate and polyglycerol esters.

Thus, the process begins with the formation of a first aqueous solution mixture by the blending of the sweetener with the film-forming polymer coating material. Thereafter, the flavour is added to the first aqueous solution mixture to form a second aqueous solution mixture. The second aqueous solution mixture is then emulsified to form an emulsion which is then treated to form the final delivery system by spray drying of the emulsion, so that the resulting product comprises particles of the dried emulsified mixture of the sweetener, flavour and film former.

Thus, the process of the present invention comprises an oil-water emulsion formed in two stages, first by the combination of the sweetener and an aqueous solution of the film-forming polymer coating material to form a first aqueous solution mixture, and thereafter by the addition of the flavour oil to the first aqueous solution mixture to form a second aqueous solution mixture, and the emulsification of the second aqueous solution mixture. The final product as prepared in particulate form is distinctive in that the flavour is dispersed as discrete droplets each surrounded by a matrix comprising the coating in combination -with the sweetener. The sweetener is dispersed in the matrix but not as discrete particles. The manner in which the present emulsion is formed yields a virtually homogenized mass which, when spray dried, forms particles which offer improved release of both actives together with the desired suppression of bitterness that is usually encountered when particles having higher concentrations of certain flavour oils are prepared.

A further characteristic and advantage of the present flavour delivery system is that the resulting particles exhibit bioadhesive properties that are believed to promote a desired prolongation of the release of both actives. Thus, the gum film-formers are believed to coat the mouth and to act thereby in a bioadhesive fashion.

The present delivery system finds utility in a variety of food and confectionery products as an additive thereto, and it offers a combined sensation of flavour and sweetness. The same protection is provided to both actives and thereby longevity and intensity of both flavour and sweetness release that are experienced is enhanced.

According to a second aspect of the present invention, there is provided a chewing gum composition offering improved flavour intensity and longevity, comprising a gum base and a flavour delivery system, the flavour delivery system being one produced by the process of the first-mentioned aspect of the present invention.

The process for producing a chewing gum composition having improved sustained flavour intensity and release properties, may comprise:

(1) preparing a flavour delivery system by the process according to the first aspect of the present invention;

(2) combining the flavour delivery system prepared in step 1 with a homogeneous mixture of a gum base and remaining chewing gum ingredients; and

(3) forming the resultant mixture into suitable chewing gum shapes.

The present delivery system may be incorporated into a variety of confections including, in addition to chewing gums, hard and soft candies, pharmaceutical preparations, as a part of tablet coatings, and in such novel products as "scratch-and-sniff" and aroma packaging.

The flavour delivery system of the present invention may be used alone or in combination with conventional flavours, including liquid flavours and other spray dried flavours, as well as with optional sweeteners, in various edible products.

The chewing gum composition of the present invention may include in addition to the gum base and delivery system, sweeteners, fillers, and other additives. Both sugar-containing and sugarless gums are contemplated, including gums with high gum base-low carbohydrate content.

In the following description, reference is made to the accompanying drawings, in which:

Figure 1 is a schematic diagram depicting the sequence and apparatus involved in the preparation of the flavour delivery system of the present invention;

Figure 2 is a schematic cross-section of a representative particle of the flavour delivery system of the present invention;

Figure 3 is a graph presenting the results of comparative sensory evaluation of compressed peppermint flavoured mints containing the inventive flavour delivery system and two control formulations containing, respectively, conventionally added liquid peppermint flavour alone and liquid flavour together with free sweetener; and

Figure 4 is a graph presenting the results of comparative sensory evaluation of compressed peppermint flavoured mints containing the inventive flavour delivery system and a control formulation containing conventionally prepared spray dried peppermint flavour.

The film-forming polymer coating material of the present invention may comprise a hydrocolloid. Suitable hydrocolloids may be generally selected from gums, pectins, alginates, mucilages, and mixtures thereof. Specifically, the hydrocolloid may be material selected from gum arabic, tragacanth, karaya, ghatti, agar, alginates, carrageenans, fucellan, psyllium, and mixtures thereof. The hydrocolloid may also be selected from polyvinyl pyrrolidone, gelatin, dextran, xanthan, curdan, cellulose, methylcellulose, ethylcellulose, hydroxyethyl cellulose, hydroxypropyl cellulose, hydroxypropyl methylcellulose, carboxymethyl cellulose, low methoxy pectin, propylene glycol alginate, polydextrose, modified starch, maltodextrin, and mixtures thereof.

The present flavour delivery system may optionally be formulated with one or more excipients or bulking agents. Such excipients may be selected from carbohydrate materials, polyhydric alcohols and mixtures thereof. Many of the excipients listed herein are also useful as firm-forming polymer coating materials, and in the instance where such material is used in this latter capacity, the bulking properties of the material are understood to be conferred to the product.

Accordingly, carbohydrates useful as excipients include traditional water-soluble sweetening agents such as monosaccharides, disaccharides and polysaccharides such as xylose, ribose, glucose, lactose, mannose, galactose, fructose, dextrose, sucrose, sugar, maltose, partially hydrolyzed starch, or corn syrup solids and sugar alcohols such as sorbitol, xylitol, mannitol and the like, and mixtures thereof. The excipients are generally present in amounts of up to 80% by weight of the final particle and can be mixed in combination with each other or used individually.

In the instance where emulsifiers are employed, suitable emulsifiers may be selected from lecithin, stearates, ester derivatives of stearates, palmitates, ester derivatives of palmitates, oleates, ester derivatives of oleates, polysorbate, sodium lauryl sulphate, glycerides, sucrose polyesters, polyglycerol esters and mixtures thereof. In a preferred embodiment, the emulsifier component may be present in an amount of from 1% to 10% by weight.

The sweetener is added to the film-forming polymer coating component during the formulation of the delivery system, and prior to the addition of the flavor component to the resulting aqueous solution mixture, as described in greater detail later on herein. Suitable sweeteners include the synthetic intense sweeteners such as soluble saccharin salts; cyclamate salts; stevioside; glycyrrhizin, dipotassium glycyrrhizin, and glycyrrhizic acid ammonium salt; amino acid-based sweetenens such as N-L-alpha-Aspartyl-L-phenylalanime 1-methyl ester (Aspartame); potassium salt of 6-methyl-1,2,3,-oxathiazin-4(3H)-one-2,2-dioxide (Acesulfame-K, a commercially available product of Hoechst Celanese Corporation, Somerville, New Jersey); 4,1',6',-Trichloro-4,1',6'-trideoxygalactosucrose (Sucralose, a commercially available product of McNeil Specialty products Company, Skillman, New Jersey); L-alpha-Aspartyl-N-(2,2,4,4-tatramethyl-3-thietanyl)-D-alaninamide hydrate (Alitame, a commercially available product of Pfizer, New York, New York); and thaumatin (Talin).

The above sweeteners and similar intense sweeteners not listed above are chemically distinct and often present special problems when they are included in ingestible products. For example, certain sweeteners present stability problems, such as Aspartame which breaks down into potentially toxic byproducts in the presence of aldehydes, ketones, moisture and the like. Similarly, other sweeteners exhibit a bitter aftertaste or off-note, such as Saccharin (a commercially available product of PMC Specialty Group Inc., Cincinnati, Ohio), Stevioside, Acesulfame-K, glycyrrhizin and its salts, and Talin. The incorporation of the aforenoted sweeteners into the present delivery system overcomes the prior drawbacks to their use, as the stability and taste-masking capability of the present delivery system provides the necessary protection for these intense sweeteners and improves and enhances their sweetness sensation in ingestible products.

Though not wishing to be bound to a particular theory of operation, it is believed that the present invention is predicated in part on the discovery that an interaction exists between flavors and particularly flavor oils and certain intense sweeteners such as aspartame and acesulfame-K when presented in the hydrocolloid coatings hereof, such that the sweeteners mask the bitterness of the flavor component. Further, the sequential admixture and emulsification of the ingredients with each other is believed to contribute both to the masking effect exerted on the flavor oil and the improved uniformity and extension of the release and perception of both actives.

Useful flavoring agents may be chosen from synthetic flavoring liquids such as synthetic flavor oils and flavoring aromatics and/or oils; and/or liquids, oleoresins or extracts derived from plants, leaves, flowers, fruits, etc., and combinations thereof. Preferably, the flavor component is selected from spearmint oil, cinnamon oil, oil of wintergreen (methylsalicylate) and peppermint oil, banana oil clove oil, bay oil, anise oil, eucalyptus oil, thyme oil, cedar leaf oil, oil of nutmeg, allspice, oil of sage, mace, oil of bitter almonds, and cassia oil. Also useful are artificial, natural or synthetic fruit flavors such as vanilla, and citrus oils including lemon, orange, grape, lime and grapefruit and fruit essences including apple, pear, peach, grape, strawberry, raspberry, cherry, plum, pineapple, apricot and so forth.

The present invention includes both sugar containing and sugarless chewing gums comprising a gum base, optionally one or more sweeteners and the present delivery system. In the instance where the gum formulations are being prepared, a variety of softening agents may be utilized for their intended purposes. Such softening agents suitable for gum formulations include lecithin, glycerin, acetylated monoglyceride, triacetin, hydrogenated vegetable oils, mineral oils, polyglycerol esters of fatty acids, and mixtures thereof. These softening agents are utilized within conventional amounts for such ingredients.

The total amount of flavoring agent employed in a gum formulation is normally a matter of preference subject to such factors as flavor type, base type and strength desired. In general, amounts of about 0.5% to about 10.0% by weight of the final chewing gum composition are usable with amounts of about 0.5% to about 2.5% being preferred and about 0.7% to about 2.0% being most preferred.

With regard to chewing gum formulations in which the novel delivery system is employed, the amount of gum base employed will vary greatly depending on various factors such as the type of base used, consistency desired and other components used to make the final product. In general, amounts of about 5% to about 85% by weight of the final chewing gum composition are acceptable for use in chewing gum compositions with preferred amounts of about 15% to about 70% by weight. The gum base may be any water-insoluble gum base well known in the art. Illustrative examples of suitable polymers in gum bases include both natural and synthetic elastomers and rubbers. For example, those polymers which are suitable in gum bases include, without limitation, substances of vegetable origin such as chicle, jelutong, gutta percha, balata, lechi-caspa, sorva and crown gum. Synthetic elastomers such as butadienestyrene copolymers, isobutylene-isoprene copolymers, polyethylene, polyisobutylene and polyvinylacetate and mixtures thereof are particularly useful.

The gum base composition may contain elastomer solvents to aid in softening the rubber component. Such elastomer solvents may comprise methyl, glycerol or pentaerythritol esters of rosins or modified rosins, such as hydrogenated, dimerized or polymerized rosins or mixtures thereof. Examples of elastomer solvents suitable for use herein include the pentaerythritol ester of partially hydrogenated wood rosin, pentaerythritol ester of wood rosin, glycerol ester of wood rosin, glycerol ester of partially dimerized rosin, glycerol ester of polymerized rosin, glycerol ester of tall oil rosin, glycerol ester of wood rosin and partially hydrogenated wood rosin and partially hydrogenated methyl ester of rosin, such as polymers of alpha-pinene or beta-pinene; terpene resins including polyterpene and mixtures thereof. The solvent may be employed in an amount ranging from about 10% to about 75% and preferably about 45% to about 70% by weight to the gum base.

A variety of traditional ingredients such as plasticizers or softeners such as lanolin, stearic acid, sodium stearate, potassium stearate, glyceryl triacetate, glycerin and the like, for example, natural waxes, petroleum waxes, such as polyurethane waxes, paraffin waxes and microcrystalline waxes may also be incorporated into the gum base to obtain a variety of desirable textures and consistency properties. In accordance with the invention, however, these ingredients may be reduced in amount or in some cases, may be eliminated entirely. When present, these individual additional materials are generally employed in amounts of up to about 15% by weight and preferably in amounts of from about 3% to about 10% by weight of the final gum base composition.

The chewing gum composition may additionally include the conventional additives of coloring agents such as titanium dioxide; emulsifiers such as lecithin and glyceryl monostearate; additional fillers such as aluminum hydroxide, alumina, aluminum silicates, calcium carbonate, and talc and combinations thereof; and additional flavoring agents. These fillers may also be used in the gum base in various amounts. Preferably, the amount of fillers when used will vary from about 4% to about 35% by weight of the final chewing gum.

In the instance where sweeteners are utilized in addition to those that are included in the delivery system, the present invention contemplates the inclusion of those sweeteners well known in the art, including both natural and artificial sweeteners. Thus, additional sweeteners may be chosen from the following non-limiting list: sugars such as sucrose, glucose (corn syrup), dextrose, invert sugar, fructose, polydextrose, cellulose, fibers, and mixtures thereof, saccharine and its various salts such as the sodium or calcium salt; cyclamic acid and its various salts such as the sodium salt; the dipeptide sweeteners such as aspartame; dihydrochalcone compounds, glycyrrhizin; Stevia Rebaudiana (Stevioside); chloro derivatives of sucrose; dihydroflavinol; hydroxyguaiacol esters; L-amino dicarboxylic acid gem-diamines; L-aminodicarboxylic acid aminoalkenoic acid ester amides; and sugar alcohols such as sorbitol, sorbitol syrup, mannitol, xylitol, and the like. Also contemplated as an additional sweetener is the nonfermentable sugar substitute (hydrogenated starch hydrolysate) which is described in U.S. Reissue Patent No. 26,959. Also contemplated is the synthetic sweetener 3,6-dihydro-6-methyl-1-1,2,3-oxathiazin-4-one-2,2-dioxide, particularly the potassium (acesulfame-K), sodium and calcium salts thereof as described in German Patent No. 2,001,017.7.

Suitable auxiliary flavorings including both natural and artificial flavors, and mints such as peppermint, menthol, artificial vanilla, cinnamon, various fruit flavors, both individual and mixed, and the like are contemplated. Such flavorings are generally utilized in amounts that will vary depending upon the amount of the flavor delivery system employed and may, for example, range in amounts of up to about 2% by weight of the final chewing gum composition weight. Thus the auxiliary flavorings may be present in the delivery system, in the chewing gum composition itself, or both.

The colorants useful in the present invention include the pigments such as titanium dioxide, that may be incorporated in amounts of up to about 1% by weight, and preferably up to about 6% by weight. Also, the colorants may include other dyes suitable for food, drug and cosmetic applications, and known as FD&C dyes and the like. The materials acceptable for the foregoing spectrum of use are preferably water-soluble. Illustrative examples include indigoid dye, known as FD&C Blue No. 2, which is the disodium salt of 5,5'-indigotindisulfonic acid. Similarly, the dye known as FD&C Green No. 1 comprises a triphenylmethane dye and is the monosodium salts of 4-(4-N-ethyl-p-sulfobenzylamino)diphenylmethylene]-[1-(N-ethyl-N-p-sulfoniumbenzyl)-2-5-cyclohexadieneimine]. A full recitation of all FD&C and D&C dyes and their corresponding chemical structures may be found in the Kirk-Othmer Encyclopedia of chemical Technology, in Volume 5, pages 857-884.

The chewing gums of the invention may be in any form known in the art, such as stick gum, slab gum, chunk gum, shredded gum, hard-coated gum, tableted gum, as well as center-filled gum.

A representative process for preparing a chewing gum composition including the inventive flavor delivery system is as follows. The gum base is melted (about 85° to about 90°C), cooled to from 75° to 80°C and placed in a pre-warmed (60°C) standard mixing kettle equipped with sigma blades. Any additional emulsifier for the gum base is then added and mixed in. Next, a portion of any sorbitol and/or any glycerin is added and mixed in for an additional 3 to 6 minutes. The mixing kettle is cooled and any mannitol, and/or the remainder of any sorbitol, and glycerin are then added and mixing is continued. At the time, the unflavored chewing gum temperature is about 39° to about 50°C. The flavor delivery system is then added and incorporated into the base and mixing is continued. Finally, the sweetener material is added and mixed for an additional 1 to 10 minutes. The final gum temperature is about 39°-50°C. The chewing gum composition is then discharged from the kettle, rolled, scored and formed into chewing gum pieces.

Accordingly, a further embodiment of the present invention relates to a method of preparing a chewing gum composition having improved sustained flavor intensity and release properties which comprises:

(1) Preparing a flavor delivery system by the process comprising:

(a) preparing an aqueous solution of a film forming polymer coating material;

(b) adding a sweetener to the film forming polymer coating solution of Step (a) to form a first aqueous solution mixture;

(c) adding a flavor component to the first aqueous solution mixture of Step (b) and forming a second aqueous solution mixture;

(d) forming an emulsion from second aqueous solution mixture; and

(e) forming particles from said emulsion by spray drying;

(f) wherein the flavor component, sweetener and film forming polymer coating component are present in amounts by weight of the final delivery system of from 1% to 40% for the flavor component, from 0.5% to 30% for the sweetener and from 30% to 80% for the film forming polymer coating;

(2) Adding the resultant flavor delivery system to a homogeneous mixture of a gum base and remaining chewing gum ingredients; and

(3) Forming the resultant mixture into suitable chewing gum shapes.

The preparation of the present composite begins with the formation of a first aqueous solution mixture by the blending of the sweetener with the film forming polymer coating material. Accordingly, an aqueous solution of the film forming polymer coating material is prepared, for example, by placing the film forming polymer in solution in deionized water. The sweetener is then added to the polymer solution to form the first aqueous solution mixture. Thereafter, the flavor is added to the first aqueous solution mixture to form a second aqueous solution mixture, and the resulting mixture is then homogenized, for example, for a period of 5 minutes to form a creamy emulsion.

The emulsion is then spray dried to form the final delivery system. For example, spray drying may be conducted with an inlet air temperature ranging from about 250°C to about 290°C, and an outlet air temperature ranging from about 50°C to about 70°C. The emulsion is atomized as by passage through an air atomizing nozzle, and is then sprayed into the chamber and mixed with the heated air. As the particles form, they are collected by a cyclone positioned in the exit stream. The resulting product comprises particles of the dried emulsified mixture of the sweetener, flavor and film former.

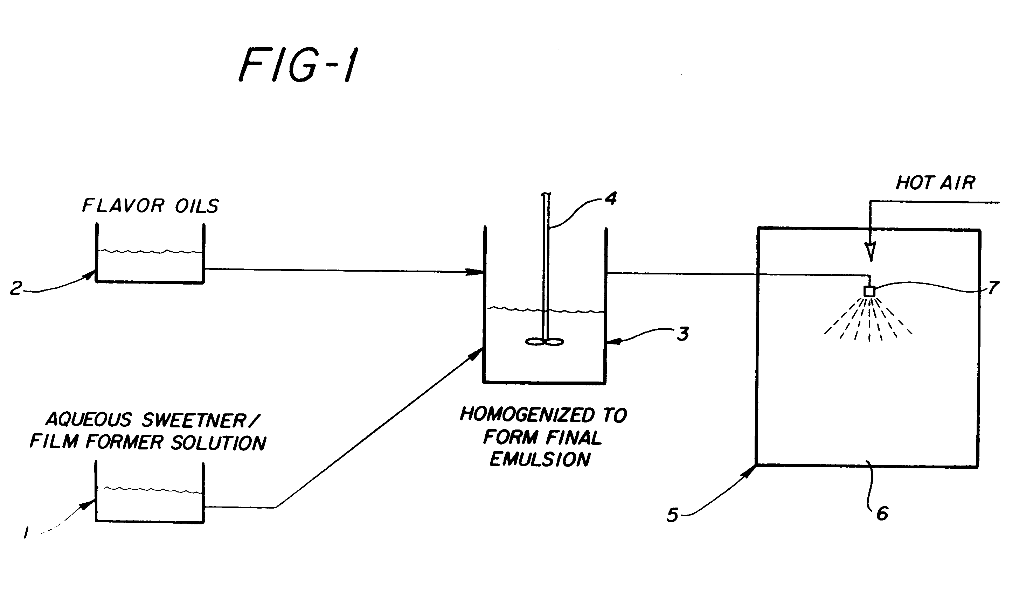

Reference may be made to Figure 1 which schematically illustrates the process described above. Thus, the first aqueous solution mixture is prepared with the sweetener and the film forming polymer as depicted in the container labeled 1. The first aqueous solution mixture is placed in the container labeled 3, after which the flavor component shown in the container labeled 2 is then added to form the second aqueous solution. Naturally, the first solution and the flavor may be combined and then added as a single solution to a container such as container 3, and the invention is not limited to the exact sequence illustrated herein.

The solution in container 3 is then homogenized such as by mixing with agitator 4 to form an emulsion. The emulsion is formed into the final flavor particles by passage through a standard spray drying apparatus schematically illustrated at 5. Apparatus 5 comprises a chamber 6 having an atomizing nozzle 7 through which the emulsion is dispersed into droplets which contact hot air and are thereby dried and form the final particles.

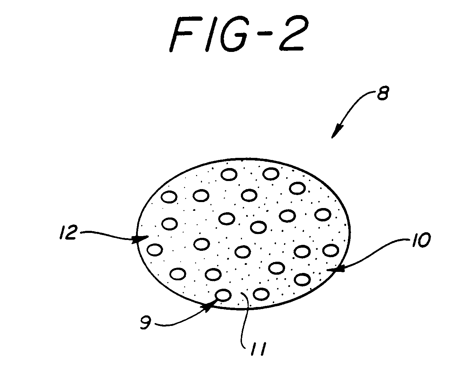

The particles as formed are believed to have a structure as schematically depicted in Figure 2. Thus, particle 8 comprises droplets of the flavor 9 surrounded by a matrix 10 made up of the film forming polymer 11 containing microparticles of sweetener 12 uniformly dispersed therein. In this way there is an intimate admixture of the flavor and the sweetener, that facilitates the bitterness suppressing effect that the sweetener exerts on the flavor. Likewise, the enrobing of the sweetener by the film forming polymer protects the former and serves also to promote improved up front sweetener delivery.

The resultant product of this invention is in powder or granulated form. The particle size is not critical to the delivery system and can be adjusted to accommodate a particular desired release rate and mouthfeel, depending on the vehicle, e.g., chewing gum, confection, pharmaceutical, oral preparation or dentifrice, in which it is incorporated.

As mentioned earlier, the present flavor delivery system including those instances where the sweetener is incorporated therein as described above, may be readily incorporated into a variety of products including comestible products such as chewing gums including both sugared and sugarless gums, pressed tabletted candies, pharmaceutical preparations including tablet coatings, dentifrices and dental compositions and industrial non-edible applications such as aroma packaging and "scratch-and-sniff" applications useful for advertising and novelty flavor and aroma delivery.

In the instance where a pressed candy is being prepared, the conventional procedures for the manufacture of such candies are followed. Accordingly, for example, the correct amount of copper gluconate, magnesium stearate, sorbitol, and flavor may be mixed in a blender for a period of about 5 minutes. The resultant powder may then be added to the tableting machine to form the compressed candy product. Naturally, the foregoing procedure is illustrative only, and is not limitative of the invention.

The following examples serve to provide further appreciation of the invention but are not meant in any way to restrict the effective scope of the invention. All percentages throughout the specification are by weight percent of the final delivery system unless otherwise indicated.

EXAMPLE 1

In this example, representative formulations of the flavor delivery system of the present system were prepared. The systems were prepared in accordance with the method described hereinabove. Specifically, the film former was added to deionized water to form a solution. Sweetener was then added to the resulting solution to form the first aqueous solution. Flavor was added and the second aqueous solution was formed, which was then homogenized for 5 minutes to form a creamy emulsion.

Spray drying was done on a Niro spray dryer. The dryer inlet air is heated to 250-290°C and the outlet air temperature in the 50-70°C range during the drying operation. The emulsion was pumped to an external mix air atomize nozzle on the top of the Niro spray dryer. The emulsion was atomized and sprayed down into the spray dryer chamber and mixed with the hot air. The dried particles were collected by a cyclone in the exit stream.

The resulting representative formulations are set forth in Tables IA and IB, below. Referring to Tables IA and IB, Formulations 1-5 are prepared in accordance with the present invention. Formulation 6 is a spray dried particle containing peppermint flavor and prepared in accordance with the prior art, while Formulation 5 comprises a preparation of peppermint flavor prepared in accordance with the invention.

EP 0 426 428 B1

## TABLE IA

### FLAVOR COMPOSITE EMULSIONS

| FORMULATION INGREDIENTS (WT. %) | 1 | | 2 | | 3 | |
|---|---|---|---|---|---|---|
| | Solution (%) | Dried (%) | Solution (%) | Dried (%) | Solution (%) | Dried (%) |
| FILM FORMER* | | | | | | |
| Capsul® Modified Starch | | | 15.1 | 37.75 | 15.1 | 37.75 |
| Maltodextrin (M-100) | | | 15.1 | 37.75 | | |
| Polydextrose (Improved) | | | | | 15.1 | 37.75 |
| Modified Starch (F4-550) | | | | | | |
| Gum Arabic | 24.0 | 60.00 | | | | |
| SWEETENER | | | | | | |
| Acesulfame K | 8.0 | 20.00 | 1.6 | 4.00 | 1.6 | 4.00 |
| FLAVOR | | | | | | |
| Orange | | | 8.0 | 20.00 | 8.0 | 20.00 |
| Spearmint | 8.0 | 20.00 | | | | |
| Water (Deionized) | 60.0 | | 60.0 | | 60.0 | |
| Titanium Dioxide | | | 0.2 | 0.50 | 0.2 | 0.50 |

*Listed film formers are all self-emulsifying.

## TABLE IB
### FLAVOR COMPOSITE EMULSIONS

| FORMULATION | 4 | | 5 | | 6 | |
|---|---|---|---|---|---|---|
| INGREDIENTS (WT. %) | Solution (%) | Dried (%) | Solution (%) | Dried (%) | Solution (%) | Dried (%) |
| FILM FORMER* | | | | | | |
| Capsul® Modified Starch | | | | | | |
| Maltodextrin (M-100) | | | | | | |
| Polydextrose | | | | | | |
| Modified Starch (F4-550) | 30.4 | 76.00 | 26.2 | 65.50 | 32.00 | 66.0 |
| Gum Arabic | | | | | | |
| SWEETENER | | | | | | |
| Acesulfame K | 1.6 | 4.00 | 4.8 | 12.00 | | |
| FLAVOR | | | | | | |
| Orange | 8.0 | 20.00 | | | | |
| Peppermint | | | 8.0 | 20.00 | 16.00 | 33.0 |
| Water (Deionized) | 60.0 | | 60.0 | | 51.5 | |
| Emulsifier | | | 1.0 | 2.50 | 0.5 | 1.0 |

*Listed film formers are all self-emulsifying.

### EXAMPLE II

Pressed mints were prepared in accordance with known procedures, and as set forth earlier herein, and included the flavor delivery system of the present invention and comparative formulations including conventional flavor additives. The flavor additives employed comprise Formulations 5 and 6, prepared in Example I. The inventive flavor additive employed was Formulation 5, while the comparative additive was Formulation 6.

The mints were prepared by mixing copper gluconate, magnesium stearate, sorbitol and the flavor additive in the proportions set forth in Table II, below, in a V blender for about 5 minutes whereupon a powder mixture was formed. This powder was then loaded in a tabletting machine and comparessed to form the individual mints.

EP 0 426 428 B1

## TABLE II

### PRESSED MINT PREPARATIONS

| INGREDIENTS | Sample #1 | Sample #2 | Sample #3 | Sample #4 | Sample #5 |
|---|---|---|---|---|---|
| Sorbitol/Magnesium Stearate Copper Gluconate Mix | 99.85% | 99.25% | 99.76% | 99.2424 | 98.75% |
| Liquid Peppermint Flavor | 0.15% | | 0.15% | | |
| Free Acesulfame K | | | 0.09% | | |
| Formulation 5 | | 0.75% | | | 1.25% |
| Formulation 6 | | | | 0.7576% | |
| COMMENTS: | Liquid flavor 1500 PPM | S.D. (Flavor 1500 +900 ACE-K PPM PPM | Liquid Flavor 1500 PPM + Free ACE-K 900 PPM | S.D. Flavor 2500 PPM | S.D. (Flavor 2500 + 1500 ACE-K PPM |

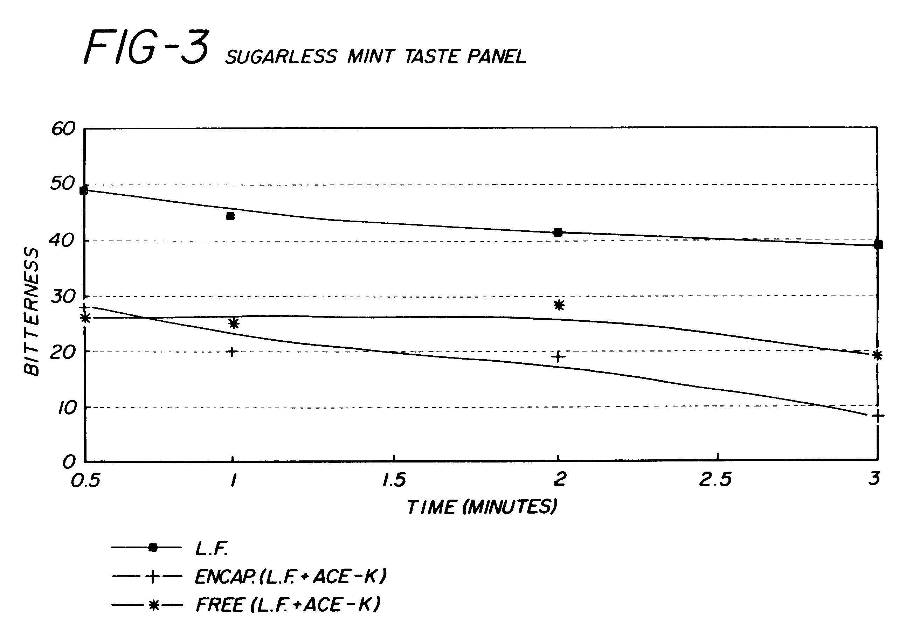

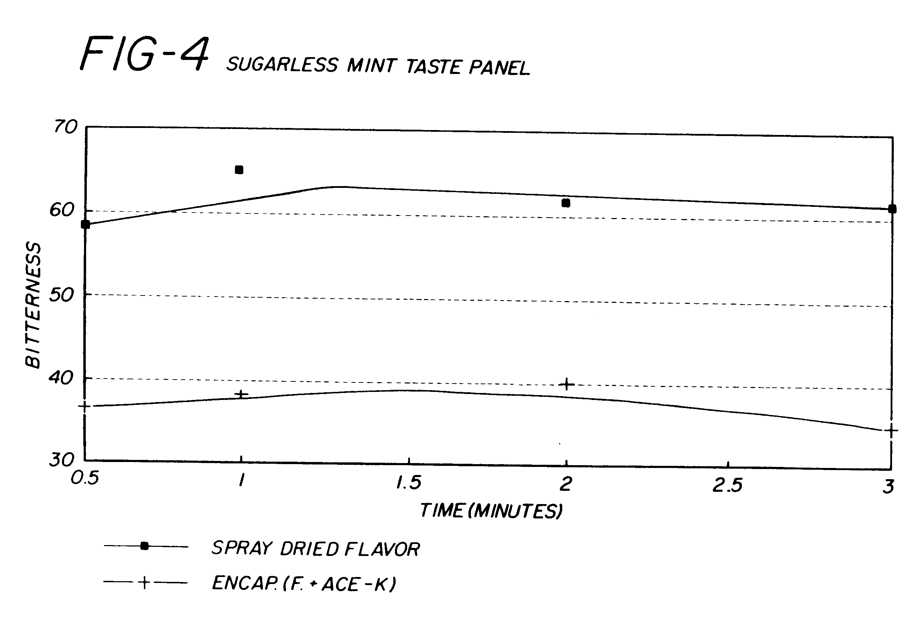

The mint tablets were then subjected to comparative taste testing, to evaluate the amount of bitterness,

13

if any, that was perceived by an expert panel. The respective control tablets were segregated as to the state of the conventional flavor added, and thus control Samples 1 and 3 prepared with liquid flavor, were compared with inventive Sample #2, while control Sample #4, prepared with spray dried flavor, was compared against inventive Sample #5. The comparison between Samples #1, #2 and #3 is depicted in Figure 3, while the comparison between Samples #4 and #5 is depicted in Figure 4.

Referring first to Figure 3, the mints prepared with the inventive flavor delivery system (Sample #2) exhibited significant improvement in bitterness reduction over the Sample #1 mints prepared with liquid flavor alone. The Sample #3 mints prepared with liquid flavor and added free acesulfame K demonstrated an initial sensation of bitterness suppression; however, this suppression was short-lived, and the sensation of bitterness grew and remained at that level for the remainder of the test period. By comparison, the inventive mints offered an initial perception that was approximately equivalent to that of Sample #3, but that dropped significantly over the test period.

Referring next to Figure 4, a similar result occurred when the control mints of Sample #4 were compared with the inventive mints of Sample #5. In this instance, a significant decrease in bitterness was experienced with the inventive mints that was in marked distinction to the perceived bitterness of the control mints containing the conventionally prepared spray dried flavor.

## Claims

1.  A process for producing a flavour delivery system offering improved uniformity of flavour release, temperature stability, and taste and aroma masking, comprising a spray-dried emulsion of:
    (a) a flavour oil component in an amount of from 1% to 40% by weight of the final delivery system;
    (b) a sweetener in an amount of from 0.5% to 30% by weight of the final delivery system; and
    (c) a film-forming polymer coating component in an amount from 30% to 80% by weight of the final delivery system:
    wherein the flavour delivery system is produced by:-
    (a) preparing an aqueous solution of the film-forming polymer coating material;
    (b) adding the sweetener to the film-forming polymer coating solution of step (a) to form a first aqueous solution mixture;
    (c) then combining the flavour component with the first aqueous solution mixture of step (b) to form a second aqueous solution mixture;
    (d) forming an emulsion from the second aqueous solution mixture; and
    (e) forming particles from the emulsion by spray drying, in which particles the flavour is dispersed as discrete droplets each surrounded by a matrix comprising the sweetener and the coating.

2.  A process according to claim 1, wherein the flavour oil component is selected from spearmint oil, cinnamon oil, oil of wintergreen (methylsalicylate), peppermint oil, lemon oil, orange oil, grape oil, lime oil, grapefruit oil, apple essence, strawberry essence, cherry essence, pineapple essence, banana oil and mixtures thereof.

3.  A process according to claim 1 or 2, wherein the film-forming polymer coating component is selected from gums, pectins, alginates, mucilages, and mixtures thereof, and is preferably selected from gum arabic, tragacanth, karaya, ghatti, agar, alginates, carrageenans, fucellan, psyllium, and mixtures thereof, or from polyvinyl pyrrolidone, gelatin, dextran, xanthan, curdan, cellulose, methylcellulose, ethylcellulose, hydroxyethyl cellulose, hydroxypropyl cellulose, hydroxypropyl methylcellulose, carboxymethyl cellulose, low methoxy pectin, propylene glycol alginate, and mixtures thereof.

4.  A process according to claim 1, 2 or 3, wherein the sweetener is a natural or artificial high intensity sweetener selected from amino acid-based sweeteners, dipeptide sweeteners, glycyrrhizin, saccharin and its salts, acesulfame salts, cyclamates, steviosides, talin, sucralose, dihydrochalcone compounds and mixtures thereof, and is preferably sodium saccharin, aspartame, talin, or acesulfame-K.

5.  A process according to any preceding claim, wherein the flavour component ia present in an amount of from 10% to 20% by weight, the sweetener is present in an amount of from 4% to 20% by weight, and the film forming polymer coating component ia present in an amount of from 50% to 75% by weight.

6.  A process according to any preceding claim, which also includes an emulsifier which is preferably present in an amount of up to 10% by weight of the final delivery system, more preferably in an amount of 1% to 10% by weight.

7. A process according to claim 6, wherein the emulsifier is selected from monoglycerides, diglycerides and triglycerides of fatty acids, polyglycerol esters, and mixtures thereof, preferably lecithin, stearates, ester derivatives of stearates, palmitates, ester derivatives of palmitates, oleates, ester derivatives of oleates, glycerides, sucrose polyesters, polyglycerol esters and mixtures thereof.

8. A process for producing a chewing gum composition offering improved flavour intensity and longevity, which comprises incorporating in a gum base a flavour delivery system, the flavour delivery system being one produced by a process as claimed in any one of claims 1 to 7.

9. A process according to claim 8, wherein the gum base comprises an elastomer selected from natural rubber, synthetic rubber and mixtures thereof, the gum base elastomer preferably being selected from chicle, jeluton, balata, gutta-percha, lechi-capsi, sorva, butadiene-styrene copolymers, polyisobutylene, isobutylene-isoprene copolymers, polyethylene, polyvinylacetate, and mixtures thereof, and preferably being present in an amount of from 5% to 85% by weight of the final chewing gum composition.

10. A process according to claim 8 or 9, which also includes incorporating one or more of fillers, colouring agents, flavour agents, softeners, plasticizers, elastomers, elastomer solvents, sweetening agents and mixtures thereof.

11. A process according to claim 8, 9 or 10, which comprises:
(1) preparing a flavour delivery system by the process according to claim 13;
(2) combining the flavour delivery system prepared in step 1 with a homogeneous mixture of a gum base and remaining chewing gum ingredients; and
(3) forming the resultant mixture into suitable chewing gum shapes.

12. A process for producing a confectionery composition, in which is incorporated a flavour delivery system produced according to any one of claims 1 to 7.

13. A process for producing a pharmaceutical composition, in which is incorporated a flavour delivery system produced according to any one of claims 1 to 7.

14. A process for producing a food product, in which is incorporated a flavour delivery system produced according to any one of claims 1 to 7.

15. A process for producing a dentifrice composition or denture adhesive, in which is incorporated a flavour delivery system produced according to any one of claims 1 to 7.

16. A process for producing coating for scratch-and-sniff products and aroma packaging products, into which is incorporated a flavour delivery system produced according to any one of claims 1 to 7.


**Patentansprüche**

1. Verfahren zur Herstellung eines Aromaabgabesystems zur gleichmäßigeren Aromafreisetzung, verbesserten Temperaturstabilität und verbesserten Geschmacks- und Aromamaskierung, umfassend eine sprühgetrocknete Emulsion aus:
(a) einer Aromaölkomponente in einer Menge von 1 bis 40 Gew.-% des fertigen Abgabesystems;
(b) einem Süßungsmittel in einer Menge von 0,5 bis 30 Gew.-% des fertigen Abgabesystems und
(c) einer filmbildenden polymeren Überzugskomponente in einer Menge von 30 bis 80 Gew.-% des fertigen Abgabesystems,
wobei das Aromaabgabesystem hergestellt wird durch
(a) Zubereiten einer wäßrigen Lösung des filmbildenden polymeren Überzugsmaterials;
(b) Zugabe des Süßungsmittels zu der in Stufe (a) erhaltenen Beschichtungslösung des filmbildenden Polymeren zur Zubereitung eines ersten wäßrigen Lösungsgemischs;
(c) anschließendes Vereinigen der Aromakomponente mit dem in Stufe (b) erhaltenen ersten wäßrigen Lösungsgemisch zur Zubereitung eines zweiten wäßrigen Lösungsgemischs;

(d) Ausbilden einer Emulsion aus dem zweiten wäßrigen Lösungsgemisch und

(e) Ausbilden von Teilchen aus der Emulsion durch Sprühtrocknen, wobei das Aroma in den Teilchen in Form einzelner Tröpfchen dispergiert wird, die jeweils von einer das Süßungsmittel und den Überzug enthaltenden Matrix umgeben ist.

2. Verfahren nach Anspruch 1, wobei die Aromaölkomponente aus dem Öl grüner Minze, Zimtöl, Wintergrünöl (Methylsalicylat), Pfefferminzöl, Zitronenöl, Orangenöl, (Wein-)Traubenöl, Limonenöl, Grapefruitöl, Apfelessenz, Erdbeeressenz, Kirschessenz, Ananasessenz, Bananenöl und Mischungen derselben ausgewählt ist.

3. Verfahren nach Anspruch 1 oder 2, wobei die filmbildende polymere Überzugskomponente aus Gummis, Pektinen, Alginaten, Schleimen und Mischungen derselben und vorzugsweise aus Gummi arabicum, Traganth, Karaya, Ghatti, Agar-Agar, Alginaten, Carrageenanen, Fucellan, Psyllium und Mischungen derselben, oder aus Polyvinylpyrrolidon, Gelatine, Dextran, Xanthan, Curdan, Cellulose, Methylcellulose, Ethylcellulose, Hydroxyethylcellulose, Hydroxypropylcellulose, Hydroxypropylmethylcellulose, Carboxymethylcellulose, Pektin niedrigen Methoxygehalts, Propylenglycolalginat und Mischungen derselben ausgewählt ist.

4. Verfahren nach Anspruch 1, 2 oder 3, wobei das Süßungsmittel ein natürliches oder künstliches hochintensives Süßungsmittel ist, das unter Süßungsmitteln auf Aminosäurebasis, Dipeptidsüßungsmittel, Glycyrrhizin, Saccharin und dessen Salzen, Acesulfamsalzen, Cyclamaten, Steviosiden, Talin, Sucralose, Dihydrochalkonverbindungen und Mischungen derselben, vorzugsweise aus Natriumsaccharin, Aspartam, Talin oder Acesulfam-K, ausgewählt ist.

5. Verfahren nach einem der vorhergehenden Ansprüche, wobei die Aromakomponente in einer Menge von 10 bis 20 Gew.-%, das Süßungsmittel in einer Menge von 4 bis 20 Gew.-% und die filmbildende polymere Überzugskomponente in einer Menge von 50 bis 75 Gew.-% vorhanden sind.

6. Verfahren nach einem der vorhergehenden Ansprüche, welches zusätzlich einen Emulgator umfaßt, der vorzugsweise in einer Menge von bis zu 10 Gew.-%, stärker bevorzugt in einer Menge von 1 bis 10 Gew.-% des fertigen Abgabesystems vorhanden ist.

7. Verfahren nach Anspruch 6, wobei der Emulgator aus Monogyceriden, Diglyceriden und Triglyceriden von Fettsäuren, Polyglycerinestern und Mischungen derselben, vorzugsweise Lecithin, Stearaten, Stearinsäureesterderivaten, Palmitaten, Palmitinsäureesterderivaten, Oleaten, Ölsäureesterderivaten, Glyceriden, Saccharosepolyestern, Polyglycerinestern und Mischungen derselben, ausgewählt ist.

8. Verfahren zur Herstellung einer Kaugummimasse verbesserter Aromaintensität und Langlebigkeit, wobei in eine Gummigrundlage ein nach einem Verfahren gemäß einem der Ansprüche 1 bis 7 zubereitetes Aromaabgabesystem eingearbeitet wird.

9. Verfahren nach Anspruch 8, wobei die Gummigrundlage ein Elastomeres enthält, ausgewählt aus Naturkautschuk, Synthesekautschuk und Mischungen derselben, wobei die Gummigrundlage vorzugsweise unter Chicle, Jeluton, Balata, Guttapercha, Lechi-capsi, Sorva, Butadien/Styrol-Mischpolymeren, Polyisobutylen, Isobutylen/Isopren-Mischpolymeren, Polyethylen, Polyvinylacetat und Mischungen derselben, ausgewählt und vorzugsweise in einer Menge von 5 bis 85 Gew.-% der fertigen Kaugummimasse vorhanden ist.

10. Verfahren nach Anspruch 8 oder 9, wobei zusätzlich ein oder mehrere Füllstoff(e), Färbemittel, Geschmackstoff(e), Weichmacher, Plastifizierungsmittel, Elastomeres (Elastomeren), Elastomerenlösungsmittel, Süßungsmittel und Mischungen derselben eingearbeitet wird (werden).

11. Verfahren nach Anspruch 8, 9 oder 10, umfassend

(1) das Zubereiten eines Aromaabgabesystems nach dem Verfahren gemäß Anspruch 1;

(2) das Zusammengeben des in Stufe 1 erhaltenen Aromaabgabesystems mit einem homogenen Gemisch einer Gummigrundlage und restlichen Kaugummibestandteilen und

(3) Ausformen des erhaltenen Gemischs zu geeigneten Kaugummiformen.

12. Verfahren zur Herstellung einer Süßware, in welche ein nach einem der Ansprüche 1 bis 7 hergestelltes Aromaabgabesystem eingearbeitet wird.

13. Verfahren zur Herstellung einer pharmazeutischen Zubereitung, in welches ein gewäß einem der Ansprüche 1 bis 7 hergestelltes Aromaabgabesystem eingearbeitet wird.

14. Verfahren zur Herstellung eines Nahrungsmittelprodukts, in welches ein gemäß einem der Ansprüche 1 bis 7 hergestelltes Aromaabgabesystem eingearbeitet wird.

15. Verfahren zur Herstellung eines Zahnputzmittels oder eines Zahnprothesenhaftmittels, in welches ein gemäß einem der Ansprüche 1 bis 7 hergestelltes Aromaabgabesystem eingearbeitet wird.

16. Verfahren zur Herstellung eines Überzugs für Ritz- und Schnupperprodukte und Aromaverpackungsprodukte, in welche ein gemäß einem der Ansprüche 1 bis 7 hergestelltes Aromaabgabesystem eingearbeitet wird.

**Revendications**

1. Un procédé de préparation d'un système de libération d'arômes présentant une uniformité de libération de l'arôme, une stabilité à la chaleur et un masquage de certains goûts et d'arômes améliorés, comprenant une émulsion séchée par pulvérisation qui contient:
   - (a) une huile aromatique en une quantité comprises entre 1 et 40% en poids du système de libération final;
   - (b) un édulcorant en une quantité comprises entre 0,5 et 30% en poids du système de libération final; et
   - (c) un composant de revêtement polymère formant un film en une quantité comprises entre 30 et 80% en poids du système de libération final.
   dans lequel le système de libération d'arômes est préparé par:
   - (a) la préparation de solutions aqueuses d'un matériel de revêtement polymère formant un film;
   - (b) l'addition de l'édulcorant à la solution de revêtement polymère formant un film de l'étape (a) pour former un premier mélange de solutions aqueuses;
   - (c) puis la combinaison du composant aromatique avec le premier mélange de solutions aqueuses de l'étape (b) pour former un second mélange de solutions aqueuses;
   - (d) la formation d'une émulsion à partir du second mélange de solutions aqueuses; et
   - (e) la formation de particules à partir de l'émulsion par séchage par pulvérisation, dans lesquelles l'arôme est dispersé sous la forme de gouttelettes discrètes, chacune étant entourée par une matrice comprenant l'édulcorant et le revêtement.

2. Un procédé selon la revendication 1, caractérisé en ce que l'huile aromatique est sélectionné parmi l'essence de menthe verte, l'essence de cannelle, l'essence de wintergreen (méthylsalicylate), l'huile de menthe poivrée, l'essence de citron, l'essence d'orange, l'essence de raisin, l'essence de lime, l'essence de pamplemousse, l'extrait de pomme, l'extrait de fraise, l'extrait de cerise, l'extrait d'ananas, l'extrait de banane et leurs mélanges.

3. Un procédé selon la revendication 1 ou 2 caractérisé en ce que le composant de revêtement polymère formant un film est sélectionné dans le groupe comprenant gommes, pectines, alginates, mucilages, et leurs mélanges, et il est de préférence sélectionné parmi: gomme arabique, tragacanthe, karaya, ghatti, l'agar, les alginates, carrageenans, fucellan, psyllium, et leurs mélanges, ou dans le groupe comprenant: polyvinyle pyrrolidone, gélatine, dextran, xanthan, curdan, cellulose, méthylcellulose, éthylcellulose, hydroxyéthylcellulose, hydroxypropylcellulose, hydroxypropylméthylcellulose, carboxyméthylcellulose, méthoxypectine légère, alginate de propylèneglycol, et leurs mélanges.

4. Un procédé selon l'une quelconque des revendications 1 à 3, caractérisé en ce que l'édulcorant est un édulcorant naturel ou artificiel, à forte intensité, sélectionné dans le groupe comprenant: les édulcorants à base d'acide aminé, les édulcorants dipeptidiques, le glycyrrhizin, la saccharine et ses sels, les sels d'acésulfame, les cyclamates, les stéviosides, le talin, le sucralose, les dérivés de dihydrochalcone et leurs mélanges, et de préférence sélectionné dans le groupe comprenant: la saccharine de sodium, l'aspartame, le talin ou l'acésulfame-K.

5. Un procédé selon l'une quelconque des revendications précédentes caractérisé en ce que le composant aromatique est présent en une quantité comprise entre 10 et 20% en poids, l'édulcorant est présent en une quantité comprise entre 4 et 20% en poids, et le composant de revêtement polymère formant un film est présent en une quantité comprise entre 50 et 75% en poids.

6. Un procédé selon l'une quelconque des revendications précédentes caractérisé en ce qu'il comprend également un émulsifiant qui est de préférence présent en une quantité allant jusqu'à 10% en poids du système de libération final et notamment en une quantité allant de 1 à 10% en poids.

7. Un procédé selon la revendication 6, caractérisé en ce que l'émulsifiant est sélectionné dans le groupe comprenant: monoglycérides, diglycérides et triglycérides d'acides gras, les esters de polyglycérol et leurs mélanges, de préférence dans le groupe comprenant: lécithine, stéarates, dérivés d'esters d'acide stéarique, palmitates, dérivés d'esters de l'acide palmitique, oléates, dérivés d'esters de l'acide d'oléique, glycérides, polyesters de sucrose, les esters de polyglycérol et leurs mélanges.

8. Un procédé de préparation d'une composition de gomme à mâcher, présentant une durée, une intensité d'arôme améliorées caractérisé en ce qu'il comprend l'incorporation dans la base de gomme d'un système de libération d'arômes, le système de libération d'arômes étant celui préparé par le procédé tel que revendiqué dans l'une quelconque des revendications 1 à 7.

9. Un procédé selon la revendication 8, caractérisé en ce que la base de gomme comprend un élastomère sélectionné parmi les caoutchoucs naturels ou synthétiques et leurs mélanges, élastomère de la base de gomme étant de préférence sélectionné parmi: chicle, jeluton, balata, gutta-percha, lechi-capsi, sorva, copolymères de butadiène-styrène, polyisobutylène, copolymères d'isobutylène-isoprène, polyéthylène, polyvinylacétate, et leurs mélanges et étant de préférence présent en une quantité comprise entre 5 et 85% en poids de la composition de gomme à mâcher finale.

10. Un procédé selon les revendications 8 ou 9, caractérisé en ce qu'il comprend également l'incorporation d'un ou de plusieurs adjuvants, agents de coloration, agents aromatiques, agents adoucissants, plastifiants, élastomères, solvants d'élastomères, agents édulcorants et leurs mélanges.

11. Un procédé selon les revendications 8, 9 et 10, caractérisé en ce qu'il comprend:
(1) la préparation d'un système de libération d'arômes par un procédé selon la revendication 13;
(2) la combinaison du système de libération d'arômes préparée dans l'étape 1 avec un mélange homogène constitué d'une base de gomme et du reste des composants de la gomme à mâcher; et
(3) la formation du mélange résultant en des formes convenables de gommes à mâcher.

12. Un procédé de préparation d'une composition de confiseries contenant un système de libération d'arômes, préparé selon l'une quelconque des revendications 1 à 7.

13. Un procédé de préparation d'une composition pharmaceutique contenant un système de libération d'arômes préparé selon l'une quelconque des revendications 1 à 7.

14. Un procédé de préparation d'un produit alimentaire, contenant un système de libération d'arômes préparé selon l'une quelconque des revendications 1 à 7.

15. Un procédé de préparation d'une composition de dentifrice ou d'un adhésif dentaire, contenant un système de libération d'arômes préparé selon l'une quelconque des revendications 1 à 7.

16. Un procédé de fabrication d'un revêtement pour des produits "à déballer et à renifler" et des produits d'emballage d'arôme contenant un système de libération d'arômes préparé selon l'une quelconque des revendications 1 à 7.

FIG-1

FIG-2

FIG-3 SUGARLESS MINT TASTE PANEL

Legend:
- L.F. (■)
- ENCAP. (L.F. + ACE-K) (+)
- FREE (L.F. + ACE-K) (*)

X-axis: TIME (MINUTES)
Y-axis: BITTERNESS

EP 0 426 428 B1

FIG-4 SUGARLESS MINT TASTE PANEL

BITTERNESS

TIME (MINUTES)

■ SPRAY DRIED FLAVOR

+ ENCAP. (F. + ACE-K)

EP 0 426 428 B1